# EUROPÄISCHE PATENTSCHRIFT

(11) **EP 3 667 056 B1**
(45) Veröffentlichungstag und Bekanntmachung des Hinweises auf die Patenterteilung: **21.06.2023**
(21) Anmeldenummer: 19214335.2
(22) Anmeldetag: 09.12.2019
(51) Int. Cl.: F02M 26/06, F01N 3/10, F02M 26/15, F02M 26/17, F02M 26/22, F01N 3/035, F02D 9/04, F02D 9/02, F02D 41/04, F02D 41/12, F02D 41/00, F02D 41/14, F01N 13/00, F02M 26/23, F02D 41/06, F02D 41/02

(54) **ABGASNACHBEHANDLUNG EINES VERBRENNUNGSMOTORS**
EXHAUST GAS AFTERTREATMENT OF AN INTERNAL COMBUSTION ENGINE
TRAITEMENT DES GAZ D'ÉCHAPPEMENT D'UN MOTEUR À COMBUSTION INTERNE

(30) Priorität: 10.12.2018 DE 102018131536
(43) Veröffentlichungstag der Anmeldung: 17.06.2020
(73) Patentinhaber: Volkswagen AG, 38440 Wolfsburg (DE)
(72) Erfinder: Baron von Ceumern-Lindenstjerna, Falk-Christian, 38124 Braunschweig (DE); Nee, Christoph, 38446 Wolfsburg (DE); Gehrke, Sebastian, 38527 Meine (DE); Hauptvogel, Mathias, 39356 Weferlingen (DE)
(74) Vertreter: Gulde & Partner

(56) Entgegenhaltungen:
- DE-A1-102006 010 095
- DE-A1-102008 015 600
- DE-A1-102011 101 079
- DE-A1-102015 108 223
- DE-A1-102017 103 560

## Beschreibung

Die Erfindung betrifft ein Verbrennungsmotor sowie ein Verfahren zur Abgasnachbehandlung eines Verbrennungsmotors gemäß dem Oberbegriff der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Es treten bei einem Ottopartikelfilter aber auch Beladungszustände auf, in denen eine unkontrollierte Durchströmung des Ottopartikelfilters mit Sauerstoff nicht erwünscht ist. Erreicht das Beladungsniveau des Ottopartikelfilters ein kritisches Maß, kann beispielsweise eine Schubphase des Verbrennungsmotors zusammen mit einer hohen Temperatur des Ottopartikelfilters zu einem unkontrollierten Rußabbrand auf dem Ottopartikelfilter führen. Dabei können durch die exotherme Oxidation der Rußpartikel so hohe Temperaturen auf der Bauteiloberfläche des Ottopartikelfilters entstehen, dass es zu thermischen Schädigungen des Ottopartikelfilters kommen kann. Daher kann es erforderlich sein, in bestimmten Betriebssituationen den Sauerstoffeintrag in den Ottopartikelfilter zu reduzieren oder gänzlich zu unterbinden.

Ferner ist in der Abgasanlage mindestens ein Katalysator angeordnet. Der oder die Katalysator(en) weisen einen Sauerstoffspeicher auf, welcher in einem Schubbetrieb des Verbrennungsmotors oder bei einem überstöchiometrischen Verbrennungsluftverhältnis mit Sauerstoff gefüllt wird. Bei einer hohen Beladung der Sauerstoffspeicher der Katalysatoren besteht jedoch die Gefahr, dass Stickoxide nicht oder nur unzureichend umgesetzt werden können, was zu einem Anstieg der Stickoxidemissionen führen kann. Dazu kann ein Schubbetrieb des Verbrennungsmotors dazu führen, dass Frischluft durch die Brennräume gefördert wird und durch den Abgaskanal ausgeschoben wird. Dadurch können die Abgasnachbehandlungskomponenten auskühlen und die Temperatur unter ihre Light-Off-Temperatur absinken, sodass nach einem Ende des Schubbetriebs nur eine unvollständige Konvertierung der limitierten Schadstoffe im Abgas erfolgen kann.

Aus der DE 10 2015 108 223 A1 ist ein Verbrennungsmotor mit einem Ansaugtrakt und einem Abgasnachbehandlungssystem bekannt. Dabei ist eine Abgasrückführungsleitung vorgesehen, welche die Abgasanlage des Verbrennungsmotors stromabwärts einer Turbine des Abgasturboladers und stromaufwärts eines Katalysators mit dem Ansaugtrakt stromabwärts eines Verdichters des Abgasturboladers verbindet. Es ist vorgesehen, dass die in einem Schubbetrieb des Verbrennungsmotors in die Abgasanlage eingebrachte Frischluft dazu genutzt wird, um einen Partikelfilter zu regenerieren.

Die DE 10 2015 220 039 A1 offenbart einen Verbrennungsmotor mit einem Ansaugtrakt und einer Abgasanlage, wobei die Abgasanlage stromabwärts eines Stickoxidabsorbers und einer weiteren Abgasnachbehandlungskomponente mit dem Ansaugtrakt stromaufwärts eines Verdichters eines Abgasturboladers verbunden ist. Dabei ist im Ansaugtrakt ein Ladeluftkühler mit einem Bypass vorgesehen, mit welchem die Ansaugluft an dem Ladeluftkühler vorbei in die Brennräume des Verbrennungsmotors geführt werden kann, um die Stickoxidemissionen zu beeinflussen. Es ist vorgesehen, bei einem Schubbetrieb des Verbrennungsmotors Kraftstoff in die Abgasanlage oder die Brennräume einzuspritzen, um den Stickoxidadsorber mit einem unterstöchiometrischen Abgas zu regenerieren.

Darüber hinaus ist aus der DE 10 2016 120 432 A1 ein Abgasnachbehandlungssystem für einen Verbrennungsmotor bekannt, bei welchem in der Abgasanlage des Verbrennungsmotors ein Partikelfilter angeordnet ist. Um einen unkontrollierten Rußabbrand auf dem Partikelfilter bei einem Schubbetrieb des Verbrennungsmotors zu vermeiden, ist ein Bypass für den Partikelfilter vorgesehen, durch welchen das Abgas bei einem Schubbetrieb des Verbrennungsmotors geleitet werden kann, um einen unkontrollierten Rußabbrand und somit eine thermische Schädigung des Partikelfilters zu vermeiden.

Die DE 10 2017 103 560 A1 offenbart einen Verbrennungsmotor, in dessen Abgasanlage ein Drei-Wege-Katalysator und ein Partikelfilter angeordnet sind. Dabei ist die Abgasanlage über eine Niederdruck-Abgasrückführung mit dem Absaugtrakt des Verbrennungsmotors verbunden. Wird ein kritischer Beladungszustand des Partikelfilters erreicht, wird zur Vermeidung eines unkontrollierten Rußabbrandes auf dem Partikelfilter eine Abgasklappe geschlossen und ein Abgasrückführungsventil geöffnet, sodass das Abgas in den Ansaugtrakt zurückgeführt wird.

Aus der DE 10 2011 101 079 A1 sind ein Abgasnachbehandlungssystem für einen Verbrennungsmotor in einem Kraftfahrzeug und ein Verfahren zur Regeneration von Stickoxid-Speicherkatalysatoren bekannt. Dabei sollen die Stickoxid-Speicherkatalysatoren insbesondere während besonderer Fahrsituation des Kraftfahrzeuges regeneriert werden.

DE 10 2008 015 600 A1 beschreibt ein Verfahren zum Betreiben eines Dieselmotors für ein Kraftfahrzeug. Dabei werden die Abgase des Dieselmotors in eine Abgasanlage eingeleitet, welche einen Oxidationskatalysator, einen Dieselpartikelfilter, einen NOx-Speicherkatalysator und einen weiteren Oxidationskatalysator sowie eine Hochdruck-Abgasrückführung und eine Niederdruck-Abgasrückführung aufweist. Dabei wird während der Regeneration des Dieselpartikelfilters ein Abgasrückführungsventil der Hochdruck-Abgasrückführung geschlossen und ein Abgasrückführungsventil in der Niederdruck-Abgasrückführung zumindest teilweise geöffnet.

Die DE 10 2006 010 095 A1 offenbart ein Verfahren zur Steuerung einer Regeneration eines Partikelfilters in der Abgasanlage eines Verbrennungsmotors. Dabei wird dem Verbrennungsmotor über einen Ansaugtrakt, in welchem eine Drosselklappe angeordnet ist, Frischluft zugeführt und das Abgas des Verbrennungsmotors in eine Abgasanlage eingeleitet. Die Abgasanlage ist über einen Abgasrückführung mit dem Ansaugtrakt verbunden. Werden die Eingriffe der Drosselklappe und der Abgasrückführung in einer vordefinierten Reihenfolge vorgenommen, kann erreicht werden, dass der Partikelfilter vor Schäden durch Überhitzung geschützt wird und gleichzeitig der Fahrkomfort nicht beeinträchtigt wird.

Aufgabe der Erfindung ist es, den Verbrauch eines Verbrennungsmotors zu reduzieren und die Emissionen, insbesondere die Stickoxidemissionen, nach einem Schubbetrieb des Verbrennungsmotors zu verringern und die Abgasnachbehandlungskomponenten möglichst lange auf ihrer Betriebstemperatur zu halten.

Erfindungsgemäß wird diese Aufgabe durch einen Verbrennungsmotor mit einem Ansaugtrakt und einer Abgasanlage gelöst, wobei der Verbrennungsmotor mittels eines Abgasturboladers aufgeladen ist, und wobei in der Abgasanlage mindestens ein erster Drei-Wege-Katalysator und stromabwärts des ersten Drei-Wege-Katalysators mindestens ein zweiter Drei-Wege-Katalysator angeordnet sind. Dabei ist vorgesehen, dass eine Niederdruck-Abgasrückführung vorgesehen ist, welche die Abgasanlage stromabwärts einer Turbine des Abgasturboladers und stromaufwärts sämtlicher katalytisch wirksamer Abgasnachbehandlungskomponenten mit dem Ansaugtrakt stromaufwärts eines Verdichters des Abgasturboladers verbindet. Der Verbrennungsmotor ist vorzugsweise als mittels Zündkerzen fremdgezündeter Verbrennungsmotor nach dem Ottoprinzip ausgeführt. Durch die Niederdruck-Abgasrückführung kann in einem ungefeuerten Schubbetrieb des Verbrennungsmotors eine Zirkulation des Abgases stattfinden, wodurch ein Auskühlen der Abgasnachbehandlungskomponenten verhindert wird und parallel verhindert wird, dass ein Sauerstoffspeicher des Drei-Wege-Katalysators im Schubbetrieb gefüllt wird. Zusätzlich kann verhindert werden, dass in einem Speicherkatalysator eingelagerte Stickoxide thermisch desorbieren, wodurch die Stickoxidemissionen verringert werden können.

Erfindungsgemäß ist vorgesehen, dass die Niederdruck-Abgasrückführung eine Abgasrückführungsleitung aufweist, welche an einer Abzweigung unmittelbar stromabwärts der Turbine und stromaufwärts sämtlicher Abgasnachbehandlungskomponenten aus einem Abgaskanal der Abgasanlage abzweigt und an einer Einmündung stromabwärts eines Luftfilters und stromaufwärts des Verdichters in einen Ansaugkanal des Ansaugtraktes einmündet. Durch einen Abzweig der Abgasrückführungsleitung stromaufwärts sämtlicher Abgasnachbehandlungskomponenten kann sichergestellt werden, dass diese in einem Abgaszirkulationsbetrieb nicht von Frischluft durchströmt werden, wodurch die Abkühlung der Drei-Wege-Katalysatoren verlangsamt wird und gleichzeitig verhindert wird, dass Sauerstoff in den Sauerstoffspeichern der Drei-Wege-Katalysatoren eingelagert wird. Somit sind die Katalysatoren auch bei einer Wiederaufnahme eines gefeuerten Motorbetriebs sofort einsatzbereit und können schädliche Abgaskomponenten konvertieren, ohne dass es zu einem Schlupf kommt. Das Füllen der Sauerstoffspeicher ist insbesondere bezüglich der Stickoxidemissionen kritisch, da bei gefüllten Sauerstoffspeichern und einem überstöchiometrischen Motorbetrieb keine Möglichkeit besteht, die im Abgas des Verbrennungsmotors enthaltenen Stickoxide in molekularen Stickstoff zu konvertieren.

Durch die in den abhängigen Ansprüchen aufgeführten Merkmale sind vorteilhafte Verbesserungen und Weiterbildungen des im unabhängigen Anspruch angegebenen Verbrennungsmotors möglich.

In einer vorteilhaften Ausführungsform des Verbrennungsmotors ist vorgesehen, dass in dem Ansaugtakt stromabwärts des Verdichters eine Drosselklappe vorgesehen ist. Durch eine Drosselklappe kann die den Brennräumen des Verbrennungsmotors zugeführte Frischluftmenge gesteuert werden. Zudem kann der Abgasmassenstrom durch die Drosselklappe in einem Schubbetrieb des Verbrennungsmotors geregelt werden, da die unverbrannte Frischluft im Schubbetrieb durch die Brennräume in die Abgasanlage ausgeschoben wird.

Besonders bevorzugt ist dabei, wenn in dem Ansaugtrakt stromaufwärts einer Einmündung der Abgasrückführungsleitung eine Androsselklappe angeordnet ist. Durch eine Androsselklappe in dem Ansaugtrakt stromaufwärts der Einmündung kann der Druck in dem Ansaugkanal abgesenkt werden, wodurch im Ansaugkanal stromabwärts dieser Androsselklappe ein Unterdruck entsteht. Dadurch kann das Spülgefälle zwischen dem Abgaskanal und dem Ansaugtrakt verstärkt werden, sodass die Zirkulation von Abgas durch die Abgasrückführungsleitung begünstigt wird.

In einer bevorzugten Ausführungsform des Verbrennungsmotors ist vorgesehen, dass in der Niederdruck-Abgasrückführung ein Abgaskühler angeordnet ist. Durch einen Abgaskühler in der Abgasrückführungsleitung kann die Temperatur des zirkulierenden Abgases reduziert werden. Dadurch können die Rohemissionen des Verbrennungsmotors, insbesondere die Stickoxid-Rohemissionen verringert werden.

Ferner ist mit Vorteil vorgesehen, dass in der Niederdruck-Abgasrückführung ein weiterer Drei-Wege-Katalysator angeordnet ist. Dabei können unverbrannte Kohlenwasserstoffe und Kohlenmonoxid durch den weiteren Drei-Wege-Katalysator zu Kohlendioxid und Wasserdampf konvertiert werden, um eine Säurebildung durch Kondensation in der Niederdruck-Abgasrückführung oder im Ansaugtrakt zu vermeiden. Ferner kann Stickstoffmonoxid zu Stickstoffdioxid aufoxidiert wird, um die Klopfneigung des Verbrennungsmotors zu reduzieren. Dadurch kann der Betriebsbereich des Verbrennungsmotors erweitert werden und der Kraftstoffverbrauch reduziert werden, da keine innermotorischen Maßnahmen zur Vermeidung von Klopfen notwendig sind.

Alternativ ist mit Vorteil vorgesehen, dass stromabwärts des mindestens einen Drei-Wege-Katalysators ein Partikelfilter angeordnet ist. Dabei wird das Abgas ebenfalls von Feststoffen gereinigt, welche sich im Partikelfilter abscheiden und somit die Rußemissionen des Verbrennungsmotors reduzieren.

In einer weiteren Verbesserung des Verbrennungsmotors ist mit Vorteil vorgesehen, dass stromabwärts einer Abzweigung einer Abgasrückführungsleitung der Niederdruck-Abgasrückführung aus einem Abgaskanal des Verbrennungsmotors eine Abgasklappe vorgesehen ist, mit welcher der Abgaskanal versperrt werden kann.

Erfindungsgemäß wird ein Verfahren zur Abgasnachbehandlung eines solchen Verbrennungsmotors vorgeschlagen, welches folgende Schritte umfasst:
- Erkennen eines Schubbetriebs des Verbrennungsmotors,
- Schließen einer Androsselklappe im Ansaugtrakt stromaufwärts einer Einmündung einer Abgasrückführungsleitung der Niederdruck-Abgasrückführung,
- Schließen einer Abgasklappe im Abgaskanal,
- Öffnen eines Abgasrückführungsventils und einer Drosselklappe im Ansaugtrakt stromabwärts des Verdichters des Abgasturboladers,
- Abschalten der Zündung und der Kraftstoffeinbringung in die Brennräume des Verbrennungsmotors,
- Zirkulieren des Abgases durch die Niederdruck-Abgasrückführung, den Ansaugtrakt stromabwärts der Einmündung, die Brennräume des Verbrennungsmotors und die Abgasanlage stromaufwärts der Abzweigung, wobei ein Frischlufteintrag in zumindest den in Strömungsrichtung eines Abgases durch die Abgasanlage letzten Drei-Wege-Katalysator verhindert wird.

Durch ein erfindungsgemäßes Verfahren kann der Kraftstoffverbrauch des Verbrennungsmotors gegenüber einem gefeuerten Schubbetrieb reduziert werden. Ferner können die Rohemissionen des Verbrennungsmotors gesenkt werden und gleichzeitig verhindert werden, dass die Drei-Wege-Katalysatoren oder weitere Abgasnachbehandlungskomponenten unter ihre jeweilige Betriebstemperatur auskühlen, bei der eine effizienten Konvertierung oder Einspeicherung von Schadstoffen möglich ist.

Gemäß einer vorteilhaften Ausführungsform des Verfahrens ist vorgesehen, dass das zirkulierende Abgas im Wesentlichen ein stöchiometrisches Verbrennungsluftverhältnis aufweist. In einer bevorzugten Ausführungsform des Verfahrens ist vorgesehen, dass in einer Schubphase des Verbrennungsmotors bei geschlossener Abgasklappe Kraftstoff in die Brennräume des Verbrennungsmotors eingebracht wird. Um auch bei einer längeren Schubphase sicherzustellen, dass es zu keinem Anstieg des Sauerstoffgehalts in dem durch die Abgasrückführungsleitung zirkulierenden Abgas kommt, ist vorgesehen, dass zusätzlich geringe Kraftstoffmengen in die Brennräume des Verbrennungsmotors eingebracht werden. Dies erfolgt bevorzugt durch eine Kraftstoffeinspritzung in die Brennräume des Verbrennungsmotors, kann alternativ jedoch auch durch eine Einspritzung in den Ansaugtrakt oder die Abgasanlage des Verbrennungsmotors erfolgen. Durch ein stöchiometrisches Abgas kann verhindert werden, dass die Sauerstoffspeicher der Drei-Wege-Katalysatoren gefüllt werden, sodass bei einer Wiederaufnahme der motorischen Verbrennung eine effiziente Konvertierung von Schadstoffen möglich ist.

In einer bevorzugten Ausführungsform des Verfahrens ist vorgesehen, dass der Verbrennungsmotor in der Schubphase abgebremst wird und zum Stillstand kommt, wobei vor einem erneuten Start des Verbrennungsmotors die Androsselklappe geöffnet und die Drosselklappe sowie das Abgasrückführungsventil geschlossen werden. Dadurch kann bei einer geplanten Wiederaufnahme der motorischen Verbrennung das Anspringen des Verbrennungsmotors erleichtert werden.

In einer vorteilhaften Verbesserung des Verfahrens ist vorgesehen, dass der Verbrennungsmotor solange mit einem stöchiometrischen Verbrennungsluftverhältnis (λ = 1) betrieben wird, bis die Abgasklappe vollständig geschlossen ist. Durch einen stöchiometrischen Motorbetrieb bis zum vollständigen Schließen der Abgasklappe kann sichergestellt werden, dass auch in der ersten Schubphase kein sauerstoffreiches Abgas in die Drei-Wege-Katalysatoren eingeleitet wird und somit die Sauerstoffspeicher der Drei-Wege-Katalysatoren nicht oder zumindest nicht vollständig beladen werden.

In einer vorteilhaften Weiterentwicklung des Verfahrens ist vorgesehen, dass in der Niederdruck-Abgasrückführung ein weiterer Drei-Wege-Katalysator angeordnet ist, wobei unverbrannte Kohlenwasserstoffe und Kohlenmonoxid durch den weiteren Drei-Wege-Katalysator zu Kohlendioxid und Wasserdampf konvertiert werden, um eine Säurebildung durch Kondensation in der Niederdruck-Abgasrückführung oder im Ansaugtrakt zu vermeiden und wobei Stickstoffmonoxid zu Stickstoffdioxid aufoxidiert wird, um die Klopfneigung des Verbrennungsmotors zu reduzieren. Dadurch kann verhindert werden, dass es zu Korrosion in der Niederdruck-Abgasrückführung oder im Ansaugtrakt des Verbrennungsmotors kommt. Zudem kann durch die Reduzierung der Klopfneigung der Betriebsbereich des Verbrennungsmotors erweitert werden, was zu einem geringeren Kraftstoffverbrauch und/oder geringeren Rohemissionen führt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Dabei sind gleiche Bauteile oder Bauteile mit gleicher Funktion in den Zeichnungen jeweils mit gleichen Bezugsziffern gekennzeichnet. Es zeigen:
- Figur 1: ein erstes Ausführungsbeispiel eines erfindungsgemäßen Verbrennungsmotors;
- Figur 2: ein weiteres Ausführungsbeispiel eines erfindungsgemäßen Verbrennungsmotors, wobei in der Niederdruck-Abgasrückführung zusätzlich ein Katalysator angeordnet ist;
- Figur 3: ein weiteres Ausführungsbeispiel für einen erfindungsgemäßen Verbrennungsmotor, wobei die Niederdruck-Abgasrückführung stromabwärts des ersten Katalysators und stromaufwärts des zweiten Katalysators aus dem Abgaskanal abzweigt; und
- Figur 4: ein Ablaufdiagramm zur Durchführung eines erfindungsgemäßen Verfahrens zur Abgasnachbehandlung eines Verbrennungsmotors.

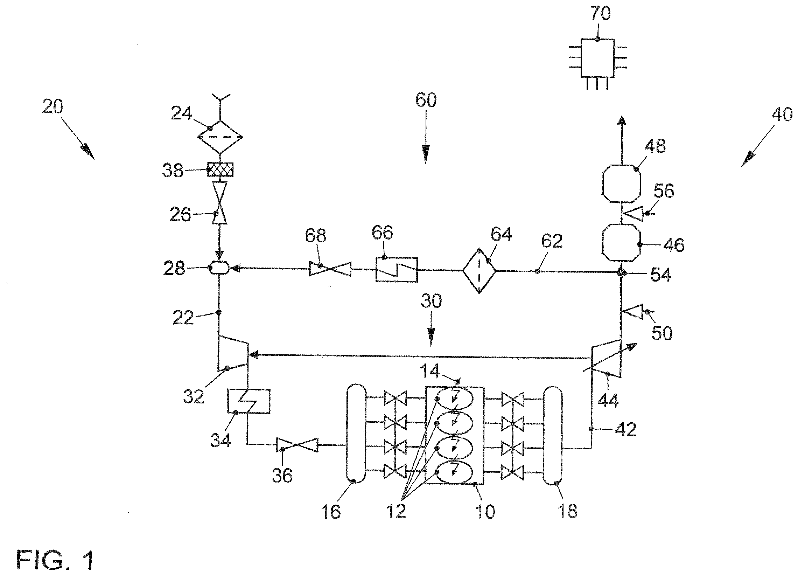

Figur 1 zeigt einen Verbrennungsmotor 10 für ein Kraftfahrzeug, welcher als ein mit Zündkerzen 14 fremdgezündeter Verbrennungsmotor 10 nach dem Ottoprinzip ausgeführt ist. Der Verbrennungsmotor 10 ist mit seinem Auslass 18 mit einer Abgasanlage 40 verbunden. Der Auslass 18 umfasst einen Abgaskrümmer, welcher die Abgase der unterschiedlichen Brennräume 12 des Verbrennungsmotors 10 einem Abgaskanal 42 der Abgasanlage 40 zuführt. Der Verbrennungsmotor 10 ist mit seinem Einlass 16 mit einem Ansaugtrakt 20 verbunden. Der Ansaugtrakt 20 weist in Strömungsrichtung der Frischluft durch einen Ansaugkanal 22 des Ansaugtraktes 20 einen Luftfilter 24 und stromabwärts des Luftfilters 24 eine Androsselklappe 26 auf. Stromabwärts der Androsselklappe 26 mündet eine Abgasrückführungsleitung 62 einer Niederdruck-Abgasrückführung 60 an einer Einmündung 28 in den Ansaugkanal 22 des Ansaugtraktes 20. Die Androsselklappe 26 dient zur Vordrosselung der Ansaugluft und zur Erzeugung eines Unterdrucks im Ansaugtrakt 20 stromabwärts dieser Androsselklappe 26. Stromabwärts der Einmündung 28 ist ein Verdichter 32 eines Abgasturboladers 30 angeordnet. Stromabwärts des Verdichters 32 und stromaufwärts des Einlasses 16 des Verbrennungsmotors 10 sind ein Ladeluftkühler 34 und eine Drosselklappe 36 zur Steuerung der den Brennräumen 12 des Verbrennungsmotors 10 zugeführten Luftmenge vorgesehen. Ferner kann in dem Ansaugtrakt 20 ein Luftmassenmesser 38 vorgesehen sein, um die Menge an angesaugter Frischluft zu messen.

Die Abgasanlage 40 weist einen Abgaskanal 42 auf, in welchem in Strömungsrichtung eines Abgases des Verbrennungsmotors 10 durch die Abgasanlage 40 eine Turbine 44 des Abgasturboladers 30 und stromabwärts der Turbine 44 ein erster Drei-Wege-Katalysator 46 und stromabwärts des ersten Drei-Wege-Katalysators 46 ein zweiter Drei-Wege-Katalysator 48 vorgesehen sind. Stromabwärts der Turbine 44 und stromaufwärts des ersten Drei-Wege-Katalysators 46 zweigt an einer Abzweigung 54 ein Abgasrückführungskanal 62 einer Niederdruck-Abgasrückführung aus dem Abgaskanal 42 des Verbrennungsmotors 10 ab. Stromabwärts der Turbine 44 und stromaufwärts der Abzweigung 54 ist am Abgaskanal 42 eine erste Lambdasonde 50, insbesondere eine Breitbandsonde, vorgesehen, mit welcher der Sauerstoffgehalt im Abgas gemessen werden kann. Stromabwärts des ersten Drei-Wege-Katalysators 46 und stromaufwärts des zweiten Drei-Wege-Katalysators 48 ist eine zweite Lambdasonde 56, vorzugsweise eine Sprungsonde, vorgesehen, mit welcher das Verbrennungsluftverhältnis stromabwärts des ersten Drei-Wege-Katalysators 46 und stromaufwärts des zweiten Drei-Wege-Katalysators 48 beurteilt werden kann. Alternativ kann die erste Lambdasonde 50 auch stromabwärts des Auslasses 18 des Verbrennungsmotors 10 und stromaufwärts der Turbine 44 des Abgasturboladers 30 angeordnet sein. Zumindest einer der Drei-Wege-Katalysatoren 46, 48 kann als Partikelfilter 52 mit einer drei-Wege-katalytisch wirksamen Beschichtung ausgeführt sein, um zusätzlich die im Abgas des Verbrennungsmotors 10 enthaltenen Rußpartikel zurückzuhalten. Stromabwärts der Abzweigung 54, vorzugsweise stromabwärts der beiden Drei-Wege-Katalysatoren 46, 48 ist eine Abgasklappe vorgesehen, um den Querschnitt des Abgaskanals 42 zu reduzieren oder zu versperren und somit eine Zirkulation des Abgases durch die Niederdruck-Abgasrückführung zu unterstützen. Ferner weist der Verbrennungsmotor 10 ein Motorsteuergerät 70 auf, mit welchem die Einspritzmenge und der Einspritzzeitpunkt von Kraftstoff in die Brennräume 12 des Verbrennungsmotors 10 geregelt wird.

Die Niederdruck-Abgasrückführung 60 umfasst eine Abgasrückführungsleitung 62, in welcher ein Filter 64, ein Abgasrückführungskühler 66 und ein Abgasrückführungsventil 68 zur Steuerung der zurückgeführten Abgasmenge angeordnet sind. Die Abgasrückführungsleitung 62 mündet an der Einmündung 28 in den Ansaugkanal 22 des Ansaugtraktes 20.

In einem Normalbetrieb des Verbrennungsmotors 10 ist wie in Figur 1 dargestellt die Abgasklappe geöffnet und das Abgasrückführungsventil 68 geschlossen, sodass das Abgas des Verbrennungsmotors 10 durch die beiden Drei-Wege-Katalysatoren 46, 48 strömt und die schädlichen Abgaskomponenten konvertiert werden. Dabei wird der Verbrennungsmotor 10 mit einem stöchiometrischen Verbrennungsluftverhältnis (λ = 1) betrieben und die im Abgas enthaltenen, limitierten Schadstoffe, insbesondere Kohlenmonoxid (CO), unverbrannte Kohlenwasserstoffe (HC) und Stickoxide (NOx) auf den katalytisch wirksamen Oberflächen der Drei-Wege-Katalysatoren 46, 48 konvertiert. Durch eine Reduzierung der Leistungsanforderung seitens des Fahrers an den Verbrennungsmotor 10 kann der Verbrennungsmotor 10 in einem Schubbetrieb wechseln. Dabei kann ein hoher Sauerstoffeintrag in die Abgasanlage 20 bei einem Schubbetrieb des Verbrennungsmotors 10 dazu führen, dass die Sauerstoffspeicher der Drei-Wege-Katalysatoren 46, 48 vollständig mit Sauerstoff beladen werden. Um diese Beladung zu vermeiden, wird beim Schubbetrieb zunächst weiterhin Kraftstoff in den Brennräumen des Verbrennungsmotors 10 verbrannt, bis die Abgasklappe vollständig geschlossen ist und die Drei-Wege-Katalysatoren 46, 48 aus dem Abgasstrom des Verbrennungsmotors 10 entkoppelt sind. Unter einem Schubbetrieb ist in diesem Zusammenhang ein Fahrbetrieb eines Kraftfahrzeuges zu verstehen, bei dem der Verbrennungsmotor 10 durch das rollende Kraftfahrzeug geschleppt wird. Im Schubbetrieb wird die Einspritzung von Kraftstoff in die Brennräume 12 des Verbrennungsmotors 10 unterbunden, was als sogenannte Schubabschaltung bezeichnet wird. Dies würde bei geöffneter Abgasklappe dazu führen, dass der Verbrennungsmotor 10 Frischluft mit einem hohen Sauerstoffgehalt durch die Brennräume 12 in die Abgasanlage 40 fördern würde. Dies ist auch deshalb zu vermeiden, weil der hohe Sauerstoffeintrag bei hohen Temperaturen des Partikelfilters 52 zu einem unkontrollierten Rußabbrand auf dem Partikelfilter 52 und somit zu einer thermischen Schädigung des Partikelfilters 52 führen könnte. Sobald die Abgasklappe vollständig geschlossen und das Abgasrückführungsventil 68 geöffnet ist, zirkuliert das Abgas des Verbrennungsmotors 10 über die Abgasrückführungsleitung 62 zurück in den Ansaugtrakt 20 des Verbrennungsmotors 10, und der Verbrennungsmotor 10 wird in einem ungefeuerten Schubbetrieb betrieben, bei dem kein Kraftstoff den Brennräumen 12 zugeführt wird. Somit gelangt kein überschüssiger Sauerstoff in die Abgasanlage 40 und eine unerwünschte Beladung der Sauerstoffspeicher der Drei-Wege-Katalysatoren 46, 48 sowie ein unkontrollierter Rußumsatz kann effektiv verhindert werden. Durch das Schließen der Androsselklappe 26 wird ein ansaugseitiges Nachströmen von Frischluft minimiert. Dadurch entsteht im Ansaugtrakt 20 stromab der Androsselklappe 26 und stromauf des Verdichters 32 des Abgasturboladers 30 ein Unterdruck, welcher das Spülgefälle über die Abgasrückführungsleitung 62 zwischen der Abgasanlage 40 und dem Ansaugtrakt 20 erhöht und somit die Abgaszirkulation begünstigt. Bei einem länger anhaltenden Schubbetrieb ist es möglich, über die Lambdaregelung des Drei-Wege-Katalysators 42 kleine Mengen an Kraftstoff in die Brennräume 12 des Verbrennungsmotors 10 einzubringen, um die durch Leckage in den Ansaugtrakt 20 eindringende Frischluft zu kompensieren und den überschüssigen Sauerstoff auf einem der Drei-Wege-Katalysatoren 46, 48 umzusetzen. Dadurch wird eine Akkumulation der Sauerstoffkonzentration vermieden, wodurch die Beladung der Sauerstoffspeicher der Drei-Wege-Katalysatoren 46, 48 auch bei längeren Schubphasen effektiv vermieden werden kann. Wenn der Fahrer wieder ein Wunschmoment von dem Verbrennungsmotor 10 anfordert, werden die Abgasklappe und die Androsselklappe 26 wieder geöffnet und das Abgasrückführungsventil 68 geschlossen, um den Normalbetrieb wieder herzustellen.

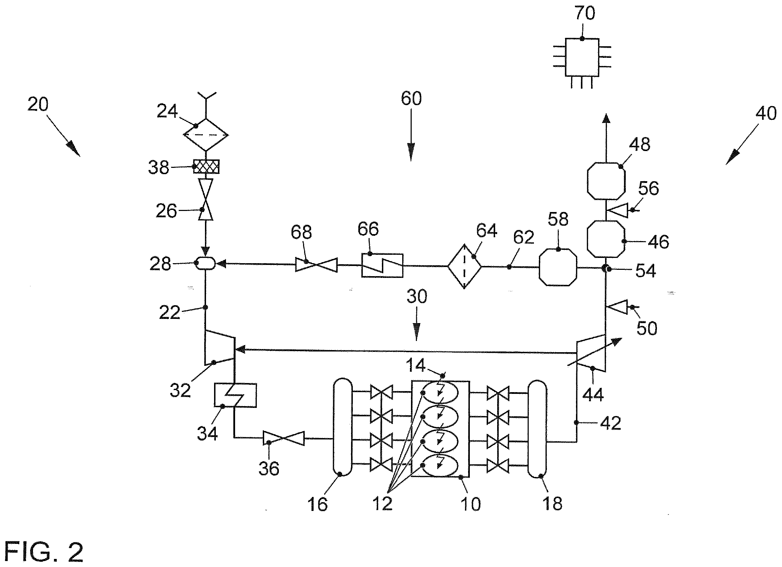

In Figur 2 ist ein weiteres Ausführungsbeispiel eines erfindungsgemäßen Verbrennungsmotors 10 dargestellt. Bei im Wesentlichen gleichem Aufbau wie zu Figur 1 ausgeführt ist in dem Abgasrückführungskanal 62 der Niederdruck-Abgasrückführung 60 stromabwärts der Abzweigung 54 und stromaufwärts des Filters 64 ein weiterer Drei-Wege-Katalysator 58 vorgesehen. Durch den weiteren Drei-Wege-Katalysator 58 können unverbrannte Kohlenwasserstoffe und Kohlenmonoxid in Kohlendioxid und Wasserdampf konvertiert werden. Dies verhindert, dass eine saure Flüssigkeit in der Abgasrückführungsleitung 62 oder dem Ansaugtrakt 20 auskondensieren kann und dort zu Korrosion führt. Ferner kann Stickstoffmonoxid mit den unverbrannten Kohlenwasserstoffen in elementaren Stickstoff reduziert werden oder zu Stickstoffdioxid aufoxidiert werden, um die Klopfneigung des Verbrennungsmotors 10 zu reduzieren.

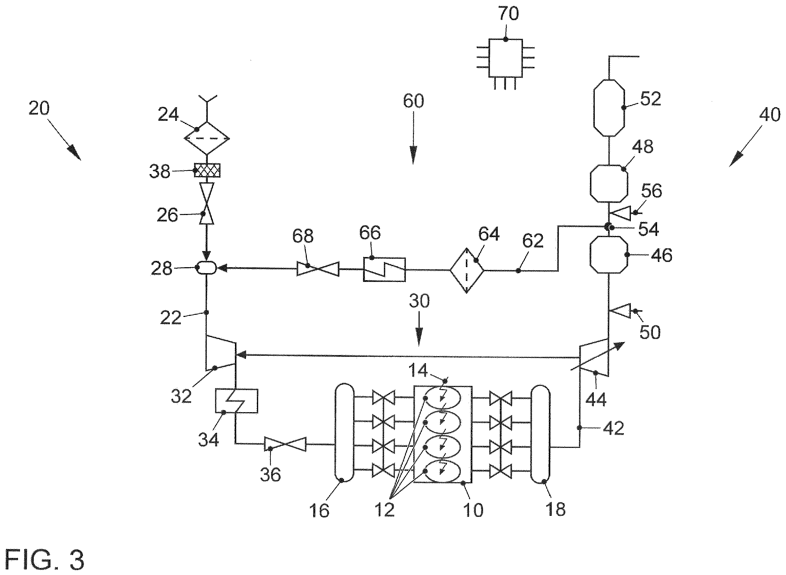

In Figur 3 ist ein Ausführungsbeispiel eines nicht zur Erfindung gehörenden Verbrennungsmotors 10 dargestellt. Bei im Wesentlichen gleichem Aufbau wie zu Figur 1 ausgeführt ist in diesem Ausführungsbeispiel stromabwärts des zweiten Drei-Wege-Katalysators 48 ein Partikelfilter 52, insbesondere ein Ottopartikelfilter, angeordnet. Die Abgasrückführungsleitung 62 der Niederdruck-Abgasrückführung 60 zweigt in diesem Ausführungsbeispiel stromabwärts des ersten Drei-Wege-Katalysators 46 und stromaufwärts des zweiten Drei-Wege-Katalysators 48 aus dem Abgaskanal 42 des Verbrennungsmotors 10 ab. Dies führt dazu, dass im Zirkulationsbetrieb der erste Drei-Wege-Katalysator 46 von dem zirkulierenden, stöchiometrischen Abgas durchströmt wird und der zweite Drei-Wege-Katalysator 48 im Wesentlichen von Abgasstrom entkoppelt ist. Dies führt selbst für den Fall, dass Frischluft aus dem Ansaugtrakt 20 nachströmt und das zirkulierende Abgas überstöchiometrisch wird dazu, dass die Sauerstoffspeicher im zweiten Drei-Wege-Katalysator 48 nicht gefüllt werden. Dadurch kann nach einer Wiederaufnahme eines gefeuerten Betriebs des Verbrennungsmotors 10 zumindest der zweite Katalysator 48 unmittelbar für eine effiziente Konvertierung von Schadstoffen im Abgas genutzt werden.

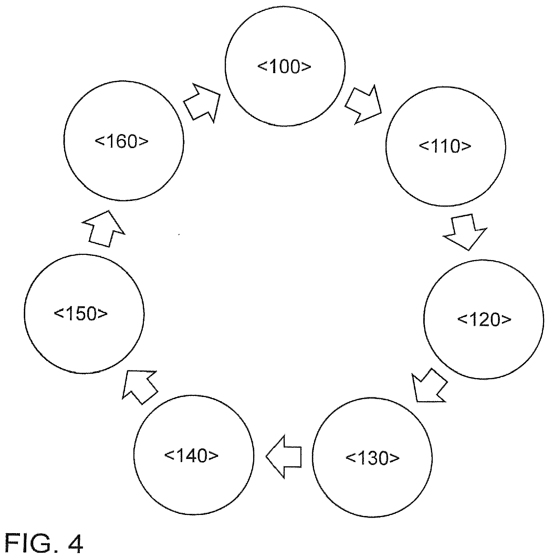

In Figur 4 ist ein Ablaufdiagramm zur Durchführung eines erfindungsgemäßen Verfahrens zur Abgasnachbehandlung eines Verbrennungsmotors 10 dargestellt. In einem ersten Verfahrensschritt <100> wird der Verbrennungsmotor 10 in einem Normalbetrieb mit einem stöchiometrischen Verbrennungsluftverhältnis betrieben, wobei die bei der motorischen Verbrennung in den Brennräumen 12 des Verbrennungsmotors 10 entstehenden limitierten Schadstoffe durch die Abgasnachbehandlungskomponenten 46, 48, 52 aus dem Abgasstrom des Verbrennungsmotors 10 entfernt oder in unlimitierte Abgaskomponenten konvertiert werden. In einem Verfahrensschritt <110> wird ein Schubbetrieb des Verbrennungsmotors oder ein gewünschter Motorstopp registriert und die Schubabschaltroutine eingeleitet. Dazu wird in einem Verfahrensschritt <120> in Abhängigkeit des Betriebszustandes des Verbrennungsmotors 10, insbesondere in Abhängigkeit von der Drehzahl des Verbrennungsmotors 10, in geordneter Reihenfolge die Abgasklappe und die Androsselklappe 26 geschlossen, das Abgasrückführungsventil 68 geöffnet und die Drosselklappe 36 geöffnet. Somit wird stöchiometrisches Abgas aus der Abgasanlage 40 entnommen und dem Ansaugtrakt 20 zugeführt. Sobald die die Ansaugstecke durchlaufende Abgasmasse die Brennräume 12 des Verbrennungsmotors 10 erreicht, wird in einem Verfahrensschritt <130> die Einspritzung von Kraftstoff in die Brennräume 12 des Verbrennungsmotors 10 gestoppt und die Zündung des Verbrennungsmotors 10 deaktiviert. Dazu wird ein Laufzeitmodell für die Strömung des Abgases durch die Niederdruck-Abgasrückführung 60 benötigt, welches in dem Motorsteuergerät 70 des Verbrennungsmotors 10 abgelegt ist. Unterstützend kann durch die erste Lambdasonde 50 die Sauerstoffkonzentration im Abgas bestimmt werden oder durch eine weitere Lambdasonde die Sauerstoffkonzentration im Ansaugtrakt bestimmt werden.

In Abhängigkeit des dem Verbrennungsmotor 10 aufgeprägten Schleppmoments vollführt diese die Schubphase oder läuft bis zum Stillstand aus. Dabei wird stöchiometrisches Abgas durch die Niederdruck-Abgasrückführung 60, den Ansaugtrakt 20, die Brennräume 12 und den Abgaskanal 42 in einem Kreislauf gefördert, während im Abgaskanal 42 stromabwärts der Abzweigung der Abgasstrom bis auf eine geringe Leckagemenge zum Stillstand kommt.

Wird in einem Verfahrensschritt <140> ein erneuter Start des Verbrennungsmotors 10 angefordert, werden in einem Verfahrensschritt <150> die Androsselklappe 26 geöffnet und die Drosselklappe 36 sowie das Abgasrückführungsventil 68 geschlossen, sodass den Brennräumen 12 des Verbrennungsmotors 10 wieder Frischluft zugeführt wird. In einem Verfahrensschritt <160> werden dann die Kraftstoffeinspritzung in die Brennräume 12 des Verbrennungsmotors 10 sowie die Zündung wieder aktiviert. Beim anschließenden Motorhochlauf werden erneut die Laufzeitmodelle aus dem Motorsteuergerät 70 genutzt und die Drosselklappen 26, 36 sowie das Abgasrückführungsventil 68 derart gesteuert, dass sich der stöchiometrische Zustand in den Abgasnachbehandlungskomponenten 46, 48, 52 nicht ändert. Diese Regelung kann durch die Lambdasonde 50 sowie eine zusätzliche Lambdasonde im Ansaugtrakt 20 unterstützt werden. Darüber hinaus ist es möglich, dabei unmittelbar einen Motorbetriebspunkt des Verbrennungsmotors 10 anzufahren, der die Niederdruck-Abgasrückführung 60 nutzt, um die Rohemissionen des Verbrennungsmotors 10 zu minimieren. Zum vollen Erhalt der thermodynamischen Wirkung der Abgasrückführung und zur Vermeidung von saurem Kondensat in der Abgasrückführungsleitung 62 wird diese optional mit einem eigenen Drei-Wege-Katalysator 58 ausgestattet.

Durch das erfindungsgemäße Verfahren ergeben sich folgende Vorteile. Da der stöchiometrische Betriebszustand in den Abgasnachbehandlungskomponenten 46, 48, 52, insbesondere in den beiden Drei-Wege-Katalysatoren 46, 48 in allen Betriebszuständen erhalten bleibt, ergibt sich zu keinem Betriebszeitpunkt die Gefahr einer Stickoxiddesorption. Die entstehenden Stickoxide können jederzeit durch die Drei-Wege-Katalysatoren 46, 48 konvertiert werden. Daraus folgt, dass bei einem Motorstart des Verbrennungsmotors 10 kein unterstöchiometrischer Betriebszustand notwendig ist, um die Sauerstoffspeicher der Drei-Wege-Katalysatoren 46, 48 auszuräumen. Daraus resultieren niedrigere Emissionen und ein Verbrauchsvorteil. Ein Auskühlen der Abgasanlage 40 wird verhindert, da durch die Positionierung der Abzweigung 54 für den Abgasrückführungskanal 62 vor dem ersten Drei-Wege-Katalysator 46 die Drei-Wege-Katalysatoren 46, 48 nicht mit Frischluft durchspült werden und ein Frischlufteintrag durch die Androsselklappe 26 verhindert wird. Prinzipiell kann der Zirkulationsbetrieb auch dazu genutzt werden, um Versottungsrückstände und Kondenswasser aus der Niederdruck-Abgasrückführung 60 auszuspülen. Dabei ist durch geeignete konstruktive Maßnahmen zu verhindern, dass die Versottungsrückstände oder das Kondenswasser mit hoher Geschwindigkeit auf den Verdichter 32 des Abgasturboladers 30 treffen, um Beschädigungen zu vermeiden.

### Bezugszeichenliste

- 10: Verbrennungsmotor
- 12: Brennraum
- 14: Zündkerze
- 16: Einlass
- 18: Auslass

- 20: Ansaugtrakt
- 22: Ansaugkanal
- 24: Luftfilter
- 26: Androsselklappe
- 28: Einmündung

- 30: Abgasturbolader
- 32: Verdichter
- 34: Ladeluftkühler
- 36: Drosselklappe
- 38: Luftmassenmesser

- 40: Abgasanlage
- 42: Abgaskanal
- 44: Turbine
- 46: erster Drei-Wege-Katalysator
- 48: zweiter Drei-Wege-Katalysator

- 50: Lambdasonde
- 52: Partikelfilter
- 54: Abzweigung
- 56: zweite Lambdasonde
- 58: dritter Drei-Wege-Katalysator
- 60: Niederdruck-Abgasrückführung
- 62: Abgasrückführungsleitung
- 64: Filter
- 66: Abgasrückführungskühler
- 68: Abgasrückführungsventil

- 70: Motorsteuergerät

## Patentansprüche

1. Verfahren zur Abgasnachbehandlung eines Verbrennungsmotors (10) mit mehreren Brennräumen (12), wobei an den Brennräumen (12) jeweils eine Zündkerze (14) zur Zündung eines Kraftstoff-Luft-Gemischs angeordnet ist, sowie mit einem Ansaugtrakt (20) und einer Abgasanlage (40), wobei der Verbrennungsmotor (10) mittels eines Abgasturboladers (30) aufgeladen ist, und wobei in der Abgasanlage (40) mindestens ein erster Drei-Wege-Katalysator (46) und stromabwärts des ersten Drei-Wege-Katalysators (68) mindestens ein zweiter Drei-Wege-Katalysator (48) angeordnet sind, wobei eine Niederdruck-Abgasrückführung (60) vorgesehen ist, welche die Abgasanlage (40) stromabwärts einer Turbine (44) des Abgasturboladers (30) und stromaufwärts sämtlicher katalytisch wirksamer Abgasnachbehandlungskomponenten (46, 48) mit dem Ansaugtrakt (20) stromaufwärts eines Verdichters (32) des Abgasturboladers (30) verbindet, wobei in dem Ansaugtrakt stromaufwärts einer Einmündung einer Abgasrückführungsleitung (62) der Niederdruck-Abgasrückführung (60) eine Androsselklappe (26) angeordnet ist, wobei im Ansaugtrakt (20) stromabwärts des Verdichters (32) des Abgasturboladers (30) eine Drosselklappe (32) angeordnet ist, wobei in einem Abgaskanal (42) der Abgasanlage (40) stromabwärts einer Verzweigung (54) der Abgasrückführungsleitung (62) aus dem Abgaskanal (42) eine Abgasklappe angeordnet ist, und wobei in der Niederdruck-Abgasrückführung (60) ein Abgasrückführungsventil (68) angeordnet ist, umfassend folgende Schritte:
- Erkennen eines Schubbetriebs des Verbrennungsmotors (10),
- Schließen der Androsselklappe (26) im Ansaugtrakt (20) stromaufwärts einer Einmündung einer Abgasrückführungsleitung (62) der Niederdruck-Abgasrückführung (60) bei Erkennen eines Schubbetriebs des Verbrennungsmotors (10),
- Schließen der Abgasklappe im Abgaskanal (42) bei Erkennen eines Schubbetriebs des Verbrennungsmotors (10),
- Öffnen des Abgasrückführungsventils (68) und der Drosselklappe (36) im Ansaugtrakt (20) stromabwärts des Verdichters (32) des Abgasturboladers (30) bei Erkennen eines Schubbetriebs des Verbrennungsmotors (10),
- Abschalten der Zündung und einer Kraftstoffeinbringung in die Brennräume (12) des Verbrennungsmotors (10) im Schubbetrieb des Verbrennungsmotors (10),
- Zirkulieren des Abgases durch die Niederdruck-Abgasrückführung (60), den Ansaugtrakt (20) stromabwärts der Einmündung (28), die Brennräume (12) des Verbrennungsmotors (10) und die Abgasanlage (40) stromaufwärts der Abzweigung (54), wobei ein Frischlufteintrag in sämtliche katalytisch wirksame Abgasnachbehandlungskomponenten (46, 48) im Schubbetrieb des Verbrennungsmotors (10) verhindert wird.

2. Verfahren nach Anspruch 1, **dadurch gekennzeichnet, dass** das zirkulierende Abgas im Wesentlichen ein stöchiometrisches Verbrennungsluftverhältnis aufweist.

3. Verfahren nach Anspruch 1 oder 2, **dadurch gekennzeichnet, dass** der Sauerstoffgehalt des zirkulierenden Abgases durch eine Lambdasonde (50) überwacht wird.

4. Verfahren nach einem der Ansprüche 1 bis 3, **dadurch gekennzeichnet, dass** der Verbrennungsmotor (10) in der Schubphase abgebremst wird und zum Stillstand kommt, wobei vor einem erneuten Start des Verbrennungsmotors (10) die Androsselklappe (26) geöffnet und die Drosselklappe (36) sowie das Abgasrückführungsventil (68) geschlossen werden.

5. Verfahren nach einem der Ansprüche 1 bis 4, **dadurch gekennzeichnet, dass** in der Niederdruck-Abgasrückführung (60) ein weiterer Drei-Wege-Katalysator (58) angeordnet ist, wobei unverbrannte Kohlenwasserstoffe und Kohlenmonoxid durch den weiteren Katalysator (58) zu Kohlendioxid und Wasserdampf konvertiert werden, um eine Säurebildung durch Kondensation in der Niederdruck-Abgasrückführung (60) oder im Ansaugtrakt (20) zu vermeiden und Stickstoffmonoxid zu Stickstoffdioxid aufoxidiert wird, um die Klopfneigung des Verbrennungsmotors (10) zu reduzieren.

6. Verbrennungsmotor (10) mit mehreren Brennräumen (12), wobei an jedem Brennraum (12) eine Zündkerze (14) zur Zündung eines Kraftstoff-Luft-Gemischs angeordnet ist, sowie mit einem Ansaugtrakt (20) und einer Abgasanlage (40), wobei der Verbrennungsmotor (10) mittels eines Abgasturboladers (30) aufgeladen ist, und wobei in der Abgasanlage (40) mindestens ein erster Drei-Wege-Katalysator (46) und stromabwärts des ersten Drei-Wege-Katalysators (46) ein zweiter Drei-Wege-Katalysator (48) angeordnet sind, wobei eine Niederdruck-Abgasrückführung (60) vorgesehen ist, welche die Abgasanlage (40) stromabwärts einer Turbine (44) des Abgasturboladers (30) und stromaufwärts sämtlicher katalytisch wirksamer Abgasnachbehandlungskomponenten (46, 48) mit dem Ansaugtrakt (20) stromaufwärts eines Verdichters (32) des Abgasturboladers (30) verbindet, wobei in dem Ansaugtrakt stromaufwärts einer Einmündung einer Abgasrückführungsleitung (62) der Niederdruck-Abgasrückführung (60) eine Androsselklappe (26) angeordnet ist, wobei im Ansaugtrakt (20) stromabwärts des Verdichters (32) des Abgasturboladers (30) eine Drosselklappe (32) angeordnet ist, wobei in einem Abgaskanal (42) der Abgasanlage (40) stromabwärts einer Verzweigung (54) der Abgasrückführungsleitung (62) aus dem Abgaskanal (42) eine Abgasklappe angeordnet ist, und wobei in der Niederdruck-Abgasrückführung (60) ein Abgasrückführungsventil (68) angeordnet ist, sowie mit einem Motorsteuergerät (70), welches dazu eingerichtet ist, alle Schritte eines Verfahrens nach einem der Ansprüche 1 bis 5 durchzuführen.

7. Verbrennungsmotor (10) nach Anspruch 6, **dadurch gekennzeichnet, dass** in der Niederdruck-Abgasrückführung (60) ein Abgaskühler (66) angeordnet ist.

8. Verbrennungsmotor (1) nach einem der Ansprüche 6 oder 7, **dadurch gekennzeichnet, dass** ein erster Drei-Wege-Katalysator (46) in der Abgasanlage (40) stromaufwärts der Verzweigung (54) und ein zweiter Drei-Wege-Katalysator (48) stromabwärts der Abzweigung (54) angeordnet sind.

9. Verbrennungsmotor (10) nach einem der Ansprüche 6 bis 8, **dadurch gekennzeichnet, dass** einer der Drei-Wege-Katalysatoren (46, 48) als ein Partikelfilter (52) mit einer drei-Wege-katalytisch wirksamen Beschichtung ausgeführt ist.

10. Verbrennungsmotor (10) nach einem der Ansprüche 6 bis 9, **dadurch gekennzeichnet, dass** in der Abgasanlage (40) stromabwärts des mindestens einen Drei-Wege-Katalysators (46, 48) ein Partikelfilter (52) angeordnet ist.

## Claims

1. Method for exhaust gas aftertreatment of an internal combustion engine (10) with a plurality of combustion chambers (12), a spark plug (14) for igniting a fuel/air mixture being arranged at each of the combustion chambers (12), and with an intake section (20) and an exhaust gas system (40), the internal combustion engine (10) being supercharged by means of an exhaust gas turbocharger (30), and at least one first three-way catalytic converter (46) and, downstream of the first three-way catalytic converter (68), at least one second three-way catalytic converter (48) being arranged in the exhaust gas system (40), a low-pressure exhaust gas recirculation means (60) being provided which connects the exhaust gas system (40) downstream of a turbine (44) of the exhaust gas turbocharger (30) and upstream of all the catalytically active exhaust gas aftertreatment components (46, 48) to the intake section (20) upstream of the compressor (32) of the exhaust gas turbocharger (30), a throttling valve (26) being arranged in the intake section upstream of an orifice of an exhaust gas recirculation line (62) of the low-pressure exhaust gas recirculation means (60), a throttle valve (32) being arranged in the intake section (20) downstream of the compressor (32) of the exhaust gas turbocharger (30), an exhaust gas flap being arranged in an exhaust gas duct (42) of the exhaust gas system (40) downstream of a branch (54) of the exhaust gas recirculation line (62) from the exhaust gas duct (42), and an exhaust gas recirculation valve (68) being arranged in the low-pressure exhaust gas recirculation means (60), comprising the following steps:
- detecting of an overrun mode of the internal combustion engine (10),
- closing of the throttling valve (26) in the intake section (20) upstream of an orifice of an exhaust gas recirculation line (62) of the low-pressure exhaust gas recirculation means (60) if an overrun mode of the internal combustion engine (10) is detected,
- closing of the exhaust gas flap in the exhaust gas duct (42) if an overrun mode of the internal combustion engine (10) is detected,
- opening of the exhaust gas recirculation valve (68) and the throttle valve (36) in the intake section (20) upstream of the compressor (32) of the exhaust gas turbocharger (30) if an overrun mode of the internal combustion engine (10) is detected,
- switching off of the ignition and a fuel introduction means into the combustion chambers (12) of the internal combustion engine (10) in the overrun mode of the internal combustion engine (10),
- circulating of the exhaust gas through the low-pressure exhaust gas recirculation means (60), the intake section (20) downstream of the orifice (28), the combustion chambers (12) of the internal combustion engine (10), and the exhaust gas system (40) downstream of the branch (54), an input of fresh air into all the catalytically active exhaust gas aftertreatment components (46, 48) being prevented in the overrun mode of the internal combustion engine (10).

2. Method according to Claim 1, **characterized in that** the circulating exhaust gas has substantially a stoichiometric combustion air ratio.

3. Method according to Claim 1 or 2, **characterized in that** the oxygen content of the circulating exhaust gas is monitored by way of a lambda probe (50).

4. Method according to one of Claims 1 to 3, **characterized in that** the internal combustion engine (10) is braked in the overrun phase and comes to a standstill, the throttling valve (26) being opened and the throttle valve (36) and the exhaust gas recirculation valve (68) being closed before restarting the internal combustion engine (10).

5. Method according to one of Claims 1 to 4, **characterized in that** a further three-way catalytic converter (58) is arranged in the low-pressure exhaust gas recirculation means (60), unburned hydrocarbons and carbon monoxide being converted by way of the further catalytic converter (58) into carbon dioxide and water vapour, in order to avoid a formation of acid as a result of condensation in the low-pressure exhaust gas recirculation means (60) or in the intake section (20), and nitrogen monoxide being oxidized to form nitrogen dioxide, in order to reduce the knocking tendency of the internal combustion engine (10).

6. Internal combustion engine (10) with a plurality of combustion chambers (12), a spark plug (14) for igniting a fuel/air mixture being arranged on each combustion chamber (12), and with an intake section (20) and an exhaust gas system (40), the internal combustion engine (10) being supercharged by means of an exhaust gas turbocharger (30), and at least one first three-way catalytic converter (46) and, downstream of the first three-way catalytic converter (46), a second three-way catalytic converter (48) being arranged in the exhaust gas system (40), a low-pressure exhaust gas recirculation means (60) being provided which connects the exhaust gas system (40) downstream of a turbine (44) of the exhaust gas turbocharger (30) and upstream of all the catalytically active exhaust gas aftertreatment components (46, 48) to the intake section (20) upstream of the compressor (32) of the exhaust gas turbocharger (30), a throttling valve (26) being arranged in the intake section upstream of an orifice of an exhaust gas recirculation line (62) of the low-pressure exhaust gas recirculation means (60), a throttle valve (32) being arranged in the intake section (20) downstream of the compressor (32) of the exhaust gas turbocharger (30), an exhaust gas flap being arranged in an exhaust gas duct (42) of the exhaust gas system (40) downstream of a branch (54) of the exhaust gas recirculation line (62) from the exhaust gas line (42), and an exhaust gas recirculation valve (68) being arranged in the low-pressure exhaust gas recirculation means (60), and with an engine control unit (70) which is configured to carry out all the steps of a method according to one of Claims 1 to 5.

7. Internal combustion engine (10) according to Claim 6, **characterized in that** an exhaust gas cooler (66) is arranged in the low-pressure exhaust gas recirculation means (60).

8. Internal combustion engine (1) according to either of Claims 6 or 7, **characterized in that** a first three-way catalytic converter (46) is arranged in the exhaust gas system (40) upstream of the branch (54), and a second three-way catalytic converter (48) is arranged downstream of the branch (54).

9. Internal combustion engine (10) according to one of Claims 6 to 8, **characterized in that** one of the three-way catalytic converters (46, 48) is configured as a particulate filter (52) with a coating with a three-way catalytic action.

10. Internal combustion engine (10) according to one of Claims 6 to 9, **characterized in that** a particulate filter (52) is arranged in the exhaust gas system (40) downstream of the at least one three-way catalytic converter (46, 48).

## Revendications

1. Procédé de post-traitement des gaz d'échappement d'un moteur à combustion interne (10) avec plusieurs chambres de combustion (12), une bougie d'allumage (14) étant agencée respectivement sur les chambres de combustion (12) pour l'allumage d'un mélange carburantair, ainsi qu'avec un conduit d'aspiration (20) et un système de gaz d'échappement (40), le moteur à combustion interne (10) étant chargé au moyen d'un turbocompresseur à gaz d'échappement (30), et au moins un premier catalyseur à trois voies (46) et, en aval du premier catalyseur à trois voies (68), au moins un deuxième catalyseur à trois voies (48) étant agencés dans le système de gaz d'échappement (40), un recyclage des gaz d'échappement à basse pression (60) étant prévu, qui relie le système de gaz d'échappement (40) en aval d'une turbine (44) du turbocompresseur à gaz d'échappement (30) et en amont de tous les composants de post-traitement des gaz d'échappement à effet catalytique (46, 48) avec le conduit d'aspiration (20) en amont d'un compresseur (32) du turbocompresseur à gaz d'échappement (30), un clapet d'étranglement (26) étant agencé dans le conduit d'aspiration en amont d'une embouchure d'une conduite de recyclage des gaz d'échappement (62) du recyclage des gaz d'échappement à basse pression (60), un clapet d'étranglement (32) étant agencé dans le conduit d'aspiration (20) en aval du compresseur (32) du turbocompresseur à gaz d'échappement (30), un clapet de gaz d'échappement étant agencé dans un canal de gaz d'échappement (42) du système de gaz d'échappement (40) en aval d'une ramification (54) de la conduite de recyclage des gaz d'échappement (62) à partir du canal de gaz d'échappement (42), et une soupape de recyclage des gaz d'échappement (68) étant agencée dans le recyclage des gaz d'échappement à basse pression (60), comprenant les étapes suivantes :
- la détection d'un fonctionnement en poussée du moteur à combustion interne (10),
- la fermeture du clapet d'étranglement (26) dans le conduit d'aspiration (20) en amont d'une embouchure d'une conduite de recyclage des gaz d'échappement (62) du recyclage des gaz d'échappement à basse pression (60) lors de la détection d'un fonctionnement en poussée du moteur à combustion interne (10),
- la fermeture du clapet de gaz d'échappement dans le canal de gaz d'échappement (42) lors de la détection d'un fonctionnement en poussée du moteur à combustion interne (10),
- l'ouverture de la soupape de recyclage des gaz d'échappement (68) et du clapet d'étranglement (36) dans le conduit d'aspiration (20) en aval du compresseur (32) du turbocompresseur à gaz d'échappement (30) lors de la détection d'un fonctionnement en poussée du moteur à combustion interne (10),
- l'arrêt de l'allumage et d'une introduction de carburant dans les chambres de combustion (12) du moteur à combustion interne (10) pendant le fonctionnement en poussée du moteur à combustion interne (10),
- la circulation des gaz d'échappement à travers le recyclage des gaz d'échappement à basse pression (60), le conduit d'aspiration (20) en aval de l'embouchure (28), les chambres de combustion (12) du moteur à combustion interne (10) et le système de gaz d'échappement (40) en amont de la ramification (54), une introduction d'air frais dans tous les composants de post-traitement des gaz d'échappement à effet catalytique (46, 48) étant empêchée pendant le fonctionnement en poussée du moteur à combustion interne (10).

2. Procédé selon la revendication 1, **caractérisé en ce que** les gaz d'échappement en circulation présentent essentiellement un rapport d'air de combustion stœchiométrique.

3. Procédé selon la revendication 1 ou 2, **caractérisé en ce que** la teneur en oxygène des gaz d'échappement en circulation est surveillée par une sonde lambda (50).

4. Procédé selon l'une quelconque des revendications 1 à 3, **caractérisé en ce que** le moteur à combustion interne (10) est freiné dans la phase de poussée et s'arrête, le clapet d'étranglement (26) étant ouvert et le clapet d'étranglement (36) ainsi que la soupape de recyclage des gaz d'échappement (68) étant fermés avant un nouveau démarrage du moteur à combustion interne (10).

5. Procédé selon l'une quelconque des revendications 1 à 4, **caractérisé en ce qu'**un autre catalyseur à trois voies (58) est agencé dans le recyclage des gaz d'échappement à basse pression (60), des hydrocarbures non brûlés et du monoxyde de carbone étant convertis en dioxyde de carbone et vapeur d'eau par l'autre catalyseur (58) afin d'éviter une formation d'acide par condensation dans le recyclage des gaz d'échappement à basse pression (60) ou dans le conduit d'aspiration (20), et du monoxyde d'azote étant oxydé en dioxyde d'azote afin de réduire la tendance au cliquetis du moteur à combustion interne (10) .

6. Moteur à combustion interne (10) avec plusieurs chambres de combustion (12), une bougie d'allumage (14) étant agencée sur chaque chambre de combustion (12) pour l'allumage d'un mélange air-carburant, ainsi qu'avec un conduit d'aspiration (20) et un système de gaz d'échappement (40), le moteur à combustion interne (10) étant chargé au moyen d'un turbocompresseur à gaz d'échappement (30), et au moins un premier catalyseur à trois voies (46) et, en aval du premier catalyseur à trois voies (46), un deuxième catalyseur à trois voies (48) étant agencés dans le système de gaz d'échappement (40), un recyclage des gaz d'échappement à basse pression (60) étant prévu, qui relie le système de gaz d'échappement (40) en aval d'une turbine (44) du turbocompresseur à gaz d'échappement (30) et en amont de tous les composants de post-traitement des gaz d'échappement à effet catalytique (46, 48) avec le conduit d'aspiration (20) en amont d'un compresseur (32) du turbocompresseur à gaz d'échappement (30), un clapet d'étranglement (26) étant agencé dans le conduit d'aspiration en amont d'une embouchure d'une conduite de recyclage des gaz d'échappement (62) du recyclage des gaz d'échappement à basse pression (60), un clapet d'étranglement (32) étant agencé dans le conduit d'aspiration (20) en aval du compresseur (32) du turbocompresseur à gaz d'échappement (30), un clapet de gaz d'échappement étant agencé dans un canal de gaz d'échappement (42) du système de gaz d'échappement (40) en aval d'une ramification (54) de la conduite de recyclage des gaz d'échappement (62) à partir du canal de gaz d'échappement (42), et une soupape de recyclage des gaz d'échappement (68) étant agencée dans le recyclage des gaz d'échappement à basse pression (60), ainsi qu'avec un appareil de commande de moteur (70) qui est conçu pour exécuter toutes les étapes d'un procédé selon l'une quelconque des revendications 1 à 5.

7. Moteur à combustion interne (10) selon la revendication 6, **caractérisé en ce qu'**un refroidisseur de gaz d'échappement (66) est agencé dans le recyclage des gaz d'échappement à basse pression (60).

8. Moteur à combustion interne (1) selon l'une quelconque des revendications 6 ou 7, **caractérisé en ce qu'**un premier catalyseur à trois voies (46) est agencé dans le système de gaz d'échappement (40) en amont de la ramification (54) et un deuxième catalyseur à trois voies (48) est agencé en aval de la ramification (54).

9. Moteur à combustion interne (10) selon l'une quelconque des revendications 6 à 8, **caractérisé en ce que** l'un des catalyseurs à trois voies (46, 48) est conçu sous la forme d'un filtre à particules (52) avec un revêtement à effet catalytique à trois voies.

10. Moteur à combustion interne (10) selon l'une quelconque des revendications 6 à 9, **caractérisé en ce qu'**un filtre à particules (52) est agencé dans le système de gaz d'échappement (40) en aval de l'au moins un catalyseur à trois voies (46, 48).
